# EUROPÄISCHE PATENTANMELDUNG

(11) **EP 3 875 308 A1**
(43) Veröffentlichungstag der Anmeldung: **08.09.2021**
(21) Anmeldenummer: 20161021.9
(22) Anmeldetag: 04.03.2020
(51) Int. Cl.: B60L 53/60

(54) **VORRICHTUNG UND VERFAHREN ZUM PROJEKTIEREN VON E-LADEINFRASTRUKTUREN FÜR KRAFTFAHRZEUGSERVICEEINRICHTUNGEN**

(71) Anmelder: Skoda Auto Deutschland GmbH, 64331 Weiterstadt (DE)
(72) Erfinder: Junge, Volkmar, 64646 Heppenheim (DE); Jung, Sebastian, 64646 Heppenheim (DE)
(74) Vertreter: Maiwald Patent- und Rechtsanwaltsgesellschaft mbH

(57) **Zusammenfassung**

Die vorliegende Erfindung betrifft eine Vorrichtung zum Projektieren einer Ladeinfrastruktur einer Kraftfahrzeugserviceeinrichtung, wobei die Vorrichtung umfasst: eine Dateneingabeeinrichtung (10), welche dazu ausgebildet ist, Betriebsparameter der Kraftfahrzeugserviceeinrichtung abzufragen und als Betriebsparameterdaten bereitzustellen; eine Datenbankeinrichtung (20), welche dazu ausgebildet ist, Regelbasisdaten für die Kraftfahrzeugserviceeinrichtung bereitzustellen; und eine Berechnungseinrichtung (30), welche dazu ausgebildet ist, basierend auf den Betriebsparameterdaten und den Regelbasisdaten Ladeinfrastrukturplanungsdaten für die Kraftfahrzeugserviceeinrichtung bzw. Standorte zu berechnen.

## Beschreibung

### Gebiet der Erfindung

Die vorliegende Erfindung betrifft Tools für die Planung von E-Ladeinfrastrukturen. Insbesondere betrifft die vorliegende Erfindung eine Vorrichtung sowie ein Verfahren zum Projektieren einer E-Ladeinfrastruktur einer Kraftfahrzeugserviceeinrichtung im öffentlichen und privaten Raum.

### Stand der Technik

Durch die Förderung von Elektrofahrzeugen mit Bundesmitteln und dem damit zu erwartenden zukünftigen deutlichen Anstieg der Anzahl an Elektrofahrzeugen, auch E-Fahrzeug, auf den Straßen müssen Ladeinfrastrukturen geschaffen werden, die in Bezug auf technische Voraussetzungen und Durchsatz der Nachfrage entsprechen. Im Speziellen sind bei Kraftfahrzeugserviceeinrichtungen die Kernprozesse sukzessive an die neuen Anforderungen anzupassen.

Aktuell beziehen sich die Kernprozesse von Kraftfahrzeugserviceeinrichtungen hauptsächlich auf den Verkauf und die Wartung von konventionellen Verbrennerfahrzeugen, welche heute vor Verkauf oder während der Wartung auf Kundenwunsch mit fossilen Brenn- und Betriebsstoffen also meist Diesel, Benzin oder Erdgas betankt werden können bzw. bei Vorführfahrzeugen generell betankt werden.

Um parallel den zukünftigen Ansprüchen gerecht zu werden, welche sich durch den steigenden Anteil und Durchsatz an Elektrofahrzeugen ergeben, müssen genaue Abschätzungen über die notwendige Ladeinfrastruktur von Kraftfahrzeugserviceeinrichtungen gemacht werden.

Es ist daher erforderlich, dass sich der Betreiber der Kraftfahrzeugserviceeinrichtung intensiv mit den zukünftigen Anforderungen und Absatzprognosen für Elektrofahrzeuge auseinandersetzt, um für den Standort entweder von Beginn an oder sukzessive optimale Voraussetzungen zu schaffen und um Fehlinvestitionen zu vermeiden.

Skalierbares Umsetzungs-Know-how ist weder bei Stromanbietern und Ladeinfrastruktur- oder Hardwarezulieferern vorhanden, begründet meist durch fehlende Kenntnisse von markenspezifischen Fahrzeug-und Autohaus Prozessen noch bei Architektur- bzw. Bauleitungsanbietern, oder aber auch begründet meist durch fehlende elektrotechnische Kenntnisse.

Dabei ergeben sich für eine betriebsindividuelle Optimal-Planung der Ladeinfrastruktur in Abhängigkeit des Absatzvolumens, der örtlichen Lage des Standortes, etwa eine Region mit dominierender Großstadt, ländlich oder städtisch - auf Englisch auch als "metro", "rural" oder "urban" bezeichnet -, erhebliche Komplexitäten an die Planungsleistung für die benötigte Infrastruktur.

Ferner können weitere Komplexitäten an die benötigte Infrastruktur für den Fall auftreten, dass weitere Automarken an dem Standort verkauft bzw. gewartet werden, und somit je nach Marke unterschiedliche Anforderungen an die bereitgestellte und abrufbare Serviceintensität für den Kundenverkehr abzubilden sind.

Für die Planer, Projektierer und Betreiber von Kraftfahrzeugserviceeinrichtungen ist es zunächst schwer zu erkennen, mit welchen "nachfrageorientierten" Ladekapazitäten zu rechnen ist, um die elektro-spezifischen Kernprozesse neben dem bestehenden Geschäft auch in Zukunft störungsfrei bedienen zu können.

Die Kraftfahrzeugserviceeinrichtungen stehen vor der Investitionsentscheidung, kurzfristig die Vorgaben der Hersteller zu erfüllen, welche eine Mindestausstattung an Ladeinfrastruktur in naher oder mittelfristiger Zukunft, etwa in den nächsten 5 bis 10 Jahren fordern oder optimale Infrastrukturen zur Bewältigung Ihrer Verkaufs- und Wartungsarbeiten zu etablieren.

Nicht in jedem Fall sind Investitionen in eine Basisinfrastruktur im Nachhinein ohne erhebliche Mehraufwendungen erweiterbar bzw. revidierbar.

Nicht revidierbare Maßnahmen sind unter anderem mehrfach Tiefbauarbeiten zur Verlegung von Stromleitungen oder der Einsatz ungeeigneter bzw. nicht erweiterbarer Technologien.

Eine Aufgabe der vorliegenden Erfindung liegt darin, eine verbesserte Vorrichtung sowie ein verbessertes Verfahren zum Projektieren einer Ladeinfrastruktur einer Kraftfahrzeugserviceeinrichtung bzw. eines Standortes bereitzustellen, welche dem Stand der Technik bisher noch nicht bekannt ist.

Gleichfalls ist eine Übertragung der Vorrichtung bzw. des Verfahrens auf private bzw. öffentliche Ladeinfrastrukturen möglich.

### Offenbarung der Erfindung

Die oben beschriebene Aufgabe wird nach einem ersten Aspekt der vorliegenden Erfindung durch die im Patentanspruch 1 beschriebene Vorrichtung sowie einem zweiten Aspekt der vorliegenden Erfindung durch das im Patentanspruch 11 angegebene Verfahren gelöst.

Bevorzugte Ausführungsformen der vorliegenden Erfindung sind in den abhängigen Patentansprüchen 2 bis 10 angegeben. Weitere Ausführungsformen ergeben sich aus der nachfolgenden Beschreibung.

Nach einem Gesichtspunkt der vorliegenden Erfindung sind unter der Berücksichtigung von örtlichen, räumlichen und technischen Möglichkeiten ein für den jeweiligen Standort individuell-optimaler Ladeinfrastrukturvorschlag zu erarbeiten.

Der generierte, digitale Prämissen-basierte Ansatz kombiniert die fahrzeugspezifischen Anforderungen der Automarken, mit den elektrotechnischen Möglichkeiten und Limitationen des Standortes und des zukünftigen prognostizierten Absatzvolumens, somit wird eine individuelle Optimal-Planung der Ladeinfrastruktur ermöglicht.

Durch eine teil- oder volldigitalisierte Übermittlung der Ergebnisse wird eine manuelle Beratung vor Ort in den meisten Fällen ersetzbar. Gleichzeitig erhalten die mit der Umsetzung der Ladeinfrastruktur verbundenen Akteure im Autohaus, so etwa ein Autohausinhaber, Architekten, Bauleiter, Hardwarelieferanten, Stromanbieter etc., parallel und zeitgerecht sowie ohne großen Koordinationsaufwand alle wesentlichen Planungsgrößen. Es entsteht erfindungsgemäß somit eine individuelle Vorgabe zur Lieferantensteuerung.

Gemäß einem ersten Aspekt der Erfindung wird eine Vorrichtung zum Projektieren einer Ladeinfrastruktur einer Kraftfahrzeugserviceeinrichtung offenbart, wobei die Vorrichtung umfasst: eine Dateneingabeeinrichtung, eine Datenbankeinrichtung und eine Berechnungseinrichtung.

Die Dateneingabeeinrichtung ist dazu ausgebildet, Betriebsparameter der Kraftfahrzeugserviceeinrichtung abzufragen und als Betriebsparameterdaten bereitzustellen.

Die Datenbankeinrichtung ist dazu ausgebildet, Regelbasisdaten für die Kraftfahrzeugserviceeinrichtung bereitzustellen.

Die Berechnungseinrichtung ist dazu ausgebildet, basierend auf den Betriebsparameterdaten und den Regelbasisdaten Ladeinfrastrukturplanungsdaten für die Kraftfahrzeugserviceeinrichtung bzw. für den Standort zu berechnen.

Gemäß einer bevorzugten Ausführungsform der vorliegenden Erfindung ist die Dateneingabeeinrichtung dazu ausgebildet, technische Stromversorgungsanschluss-und/oder Nutzungsbedingungen, die über einen lastgangfähigen Zähler über einen gewissen Zeitraum gemessen werden, für einen Standort der Kraftfahrzeugserviceeinrichtung abzufragen und als die Betriebsparameterdaten bereitzustellen.

Die technischen Nutzungsbedingungen für einen Standort, wie von der Dateneingabeeinrichtung gemessen bzw. bereitgestellt, können dabei Soll- und/oder Ist-Nutzungsbedingungen umfassen.

Weiterhin bevorzugt ist es, wenn die Berechnungseinrichtung dazu ausgebildet ist, basierend auf den technischen Stromversorgungsanschlussbedingungen für den Standort der Kraftfahrzeugserviceeinrichtung eine Verwendung von für den Standort spezifischen Ladetechniken, elektrischen Energiespeichern und/oder von elektrischen Transformatoren zu projektieren.

Gemäß einer bevorzugten Ausführungsform der vorliegenden Erfindung ist die Dateneingabeeinrichtung dazu ausgebildet,
i) Absatzprognosedaten;
ii) Wartungsprognosedaten;
iii) Flächendaten;
iv) Parkplatzdaten; oder
v) Fahrzeugbestandsdaten
der Kraftfahrzeugserviceeinrichtung abzufragen und als die Betriebsparameterdaten bereitzustellen.

Gemäß einer bevorzugten Ausführungsform der vorliegenden Erfindung ist die Datenbankeinrichtung dazu ausgebildet, als die Regelbasisdaten Bedarfsermittlungsrelationen für eine benötigte Anzahl an Ladesäulen bereitzustellen.

Gemäß einer bevorzugten Ausführungsform der vorliegenden Erfindung ist die Bedarfsermittlungsrelationen für die benötigte Anzahl an Ladesäulen in Abhängigkeit einer Leistungsklasse der Ladesäulen bereitzustellen, wenn die Datenbankeinrichtung dazu ausgebildet ist.

Gemäß einer bevorzugten Ausführungsform der vorliegenden Erfindung ist die Berechnungseinrichtung dazu ausgebildet, basierend auf den Betriebsparameterdaten und den Regelbasisdaten einen elektrischen Energieverbrauch für die Kraftfahrzeugserviceeinrichtung zu berechnen.

Weiterhin bevorzugt ist es, wenn die Dateneingabeeinrichtung dazu ausgebildet ist, einen Kraftfahrzeugtyp abzufragen und als die Betriebsparameterdaten bereitzustellen, wobei die Berechnungseinrichtung dazu ausgebildet ist, basierend auf dem abgefragten Kraftfahrzeugtyp die Ladeinfrastrukturplanungsdaten für die Kraftfahrzeugserviceeinrichtung bzw. für den Standort zu berechnen.

Gemäß einer bevorzugten Ausführungsform der vorliegenden Erfindung ist die Berechnungseinrichtung dazu ausgebildet, als Ladeinfrastrukturplanungsdaten für die Kraftfahrzeugserviceeinrichtung bzw. für den Standort eine benötige Anzahl an Ladesäulen zu berechnen.

Weiterhin bevorzugt ist es, wenn die Berechnungseinrichtung dazu ausgebildet ist, die benötigte Anzahl an Ladesäulen in Abhängigkeit einer Leistungsklasse der Ladesäulen zu berechnen.

Gemäß einem zweiten Aspekt der Erfindung wird ein Verfahren zum Projektieren einer Ladeinfrastruktur einer Kraftfahrzeugserviceeinrichtung bereitgestellt, wobei das Verfahren folgende Verfahrensschritte umfasst:
Abfragen von Betriebsparametern der Kraftfahrzeugserviceeinrichtung mittels einer Dateneingabeeinrichtung und Bereitstellen der abgefragten Betriebsparameter als Betriebsparameterdaten;
Bereitstellen von Regelbasisdaten für die Kraftfahrzeugserviceeinrichtung mittels einer Datenbankeinrichtung; und
Berechnen von Ladeinfrastrukturplanungsdaten basierend auf den Betriebsparameterdaten und den Regelbasisdaten mittels einer Berechnungseinrichtung.

Gemäß einem dritten Aspekt der vorliegenden Erfindung wird ein Computerprogrammprodukt bereitgestellt, umfassend Befehle, die bei der Ausführung des Programms durch einen Computer diesen veranlassen, die Schritte des Verfahrens nach einem zweiten Aspekt der Erfindung oder einer beliebigen Ausgestaltung oder Weiterbildung des zweiten Aspekts der Erfindung auszuführen.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1: eine Vorrichtung zum Projektieren einer Ladeinfrastruktur einer Kraftfahrzeugserviceeinrichtung gemäß einem Ausführungsbeispiel der Erfindung, und
- Fig. 2: ein Flussdiagramm zur Illustration von Schritten eines zum Projektieren einer Ladeinfrastruktur einer Kraftfahrzeugserviceeinrichtung gemäß einem Ausführungsbeispiel der vorliegenden Erfindung.

Die Figuren sind lediglich schematisch und nicht maßstabsgetreu. In den Figuren sind gleiche, gleich wirkende oder ähnliche Elemente mit gleichen Bezugszeichen versehen.

### Detaillierte Beschreibung von Ausführungsformen der Erfindung

Zunächst wird die Vorrichtung gemäß einer bevorzugten Ausführungsform der Erfindung beschrieben, und sodann die vorteilhaften Wirkungen der Erfindung beschrieben.

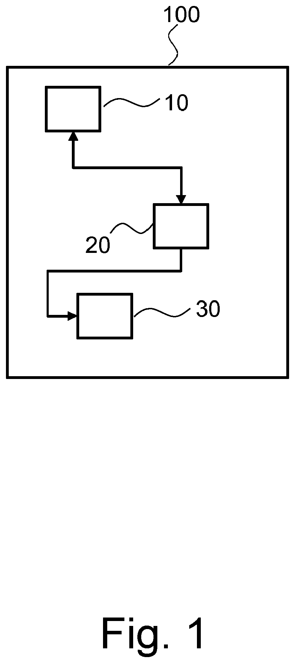

Die Fig. 1 zeigt eine schematische Darstellung der Vorrichtung 100 zum Projektieren einer Ladeinfrastruktur einer Kraftfahrzeugserviceeinrichtung gemäß einem Ausführungsbeispiel der Erfindung, wobei die Vorrichtung 100 folgende Untereinrichtungen umfasst: eine Dateneingabeeinrichtung 10, eine Datenbankeinrichtung 20 und eine Berechnungseinrichtung 30.

Die Dateneingabeeinrichtung 10 ist dazu ausgebildet Betriebsparameter der Kraftfahrzeugserviceeinrichtung abzufragen und als Betriebsparameterdaten bereitzustellen.

Gemäß einem Ausführungsbeispiel der vorliegenden Erfindung können Betriebsparameter beispielsweise die Stromversorgungsanschlussbedingungen für einen Standort, die örtliche Lage des Standortes, Flächendaten, Parkplatzdaten, Fahrzeugbestandsdaten, Wartungsprognosedaten, die verkauften bzw. gewarteten Automarken, Absatzprognosedaten und Mix der Kraftfahrzeugserviceeinrichtung sein.

Die Vorrichtung 100 zum Projektieren einer Ladeinfrastruktur einer Kraftfahrzeugserviceeinrichtung kann gemäß einem weiteren Ausführungsbeispiel der Erfindung mit Kraftfahrzeugserviceeinrichtungen in der Form von Ladesäulen oder Anordnungen von mehreren Ladesäulen im Verbund angeordnet sein. Mit anderen Worten, die Vorrichtung 100 kann in eine Steuerung für Ladesäulen bzw. Anordnungen von Ladensäulen integriert werden.

Um schrittweise eine bundesweite Versorgung mit technologisch sinnvollen Lademöglichkeiten aufzubauen, kann die Vorrichtung 100 zum Projektieren einer Ladeinfrastruktur eine toolbasierte Netzplanung der Ladeinfrastruktur auf lokaler, regionaler und nationaler Ebene umfassen.

Die Hersteller haben aufgrund der Erstellung von nationalen Vertriebsnetzplanungen anhand Fahrzeug-Zulassungen und Kundenverhalten umfangreiche Erfahrungen hierzu. Durch Kombination der Systematik mit den Anforderungen an das Ladeverhalten von Elektrofahrzeug Nutzern sowie lokalen Standort-, Platz- und/oder Energieeinspeiseverhältnissen entsteht eine Methode zur Vorhersage von optimalen Ladestandorten und deren technologischer Ausstattung.

Die Vorrichtung 100 ist beispielsweise dazu ausgebildet, eine zeitliche Staffelung nach Prioritäten bzw. Wachstumsprognose zu ermöglichen.

Folgende toolbasierte Schritte sind beispielsweise in der Vorrichtung 100 gemäß einem weiteren Ausführungsbeispiel der vorliegenden Erfindung implementiert:
Das Bereitstellen und/oder das Abfragen von Inputgrößen zur Erstellung einer Netzplanung einer Anordnung von Ladesäulen umfassen beispielsweise folgende von der Vorrichtung 100 durchführbare Verfahrensschritte:
Die Vorrichtung 100 kann Zulassungsdaten zu Kraftfahrzeugen, zu Modellen und/oder zu im Kraftfahrzeug verbauten Batteriegrößen erhalten und verarbeiten.

Gemäß einem Ausführungsbeispiel der vorliegenden Erfindung kann die Vorrichtung 100 ferner eine Auswertung von Zulassungsmeldungen auf Basis von vorgebbaren statistischen Bezirken oder definierter Bereiche auswerten, um eine Verteilung bzw. Häufung von E-Fahrzeugen auf regionaler Ebene festzustellen.

Gemäß einem Ausführungsbeispiel der vorliegenden Erfindung kann die Vorrichtung 100 ferner dazu ausgebildet sein, als Inputgrößen Daten über Fahrzeugmodelle, Batteriegrößen, Batteriekapazitäten oder Ladezeiten von zulassungsfähigen Fahrzeugmodellen (aller Hersteller bzw. Anbieter) als Kalkulationsbasis für das Rechentool zu verwenden.

Gemäß einem Ausführungsbeispiel der vorliegenden Erfindung kann die Vorrichtung 100 ferner dazu ausgebildet sein, als Inputgrößen zur Erstellung der Netzplanung mindestens eine der folgenden Parameteroptionen zu verwenden:
Ein Kunden-, Fahrzeug-, oder Ladeverhalten, Daten durch Auslesen des Nutzungs- und Ladeverhaltens aus der OBD-Schnittstelle von Fahrzeugen (OBD=Onboard Diagnose Schnittstelle aus der sich z.B. Verbrauch, gefahrene Strecken, Ruhezeiten etc. auslesen und online übertragen lassen).

Gemäß einem Ausführungsbeispiel der vorliegenden Erfindung kann die Vorrichtung 100 ferner dazu ausgebildet sein, als Inputgrößen zur Erstellung der Netzplanung mindestens eine der folgenden Parameteroptionen zu verwenden:
Daten über eine Stichprobe pro Modell um mit statistischer Genauigkeit auf das Nutzungsverhalten von Kunden (Privatkunden vs. Flottenkunden vs. Miet-/ Sharingfahrzeuge) schließen zu können.

Gemäß einem Ausführungsbeispiel der vorliegenden Erfindung kann die Vorrichtung 100 ferner dazu ausgebildet sein, als Outputgröße eine Idealnetzplanung auszugeben:
Beispielsweise erfolgt dabei die Ausgabe von Idealstandorten, an denen sich häufig Fahrzeuge aufhalten und geladen werden könnten, d.h. zeitliche Verweildauer gegeben oder hohe Wahrscheinlichkeit, dass Batterien geladen werden müssten.

Die Vorrichtung 100 kann dabei gemäß einem Ausführungsbeispiel der vorliegenden Erfindung ausgebildet sein, ein E-Kleinwagen mit einer Batteriegröße von 35 kWh, zugelassen in einer deutschen Großstadt sollte mit hoher statistischer Wahrscheinlichkeit 2-3 Mal pro Woche in einem Umkreis von 15 km für mind. 5 Stunden geladen werden.

Gemäß einem Ausführungsbeispiel der vorliegenden Erfindung kann die Vorrichtung 100 ferner dazu ausgebildet sein, als Outputgröße eine Kombination im Idealnetz mit kW-Nachfrage auszugeben:
Eine Toolbasierte Berechnung der voraussichtlich nachfragorientierten kW-Angebotsleistung für Idealstandorte durch Hochrechnung (Zugelassene Fahrzeuge im Umkreis, Batteriegrößen/ Ladekapazitäten der Fahrzeuge, Wahrscheinlichkeit für Nachladung).

Gemäß einem Ausführungsbeispiel der vorliegenden Erfindung kann die Vorrichtung 100 ferner dazu ausgebildet sein, einen manuellen Verarbeitungsschritt von einem Benutzer zu empfangen:
Beispielsweise eine vom Nutzer getroffene Vorauswahl geeigneter Standorte, einen Abgleich von Idealstandorten und/oder von hoher oder hoch zu erwartender kW-Nachfrage mit bestehenden Flächen (z.B. Parkplätze, Tankstellenanlagen) bzw. frei zur Verfügung stehender Grundstücke (Identifikation z.B. durch Matching Statistischer Bezirke mit Luftbildaufnahmen).

Gemäß einem Ausführungsbeispiel der vorliegenden Erfindung kann die Vorrichtung 100 ferner dazu ausgebildet sein, als Inputgröße eine Optimierung ausgewählter Standorte, oder eine Feststellung der maximalen Einspeiseleistung des Standortes durch Messung bzw. Abfrage zu erhalten.

Gemäß einem Ausführungsbeispiel der vorliegenden Erfindung kann die Vorrichtung 100 ferner dazu ausgebildet sein, eine Erhebung der maximal belegbaren Fläche durchzuführen, etwa eine Anzahl der Standplätze die permanent zur Ladung von E-Fahrzeugen verwendet werden können.

Eine Definition der für den Standort zu verwendenden Ladeinfrastruktur anhand der Limitationen "Fläche" und "Einspeiseleistung" bzw. Ladeverhalten an dem Standort kann vorgenommen werden.

Während bei der Optimierung von Ladeinfrastrukturen bei einem Vertriebs- bzw. Servicepartner der Standort als fixiert gilt, ist bei diesem Verfahren der Standort zunächst variabel.

Nach Auswahl eines Standortes kann das Verfahren zur Optimierung von Standorten für Vertriebs- und Servicepartner analog Anwendung finden. Einsatzmöglichkeiten ergeben sich im Bereich Bund, Länder, Städte, Kommunen aber auch bei Flottenfahrzeugbetreibern mit lokalen Standorten (Logistiker, Pflegedienste, Großkunden mit Mitarbeiterparkplätzen etc.)

Gemäß einem Ausführungsbeispiel der vorliegenden Erfindung kann die Dateneingabeeinrichtung 10 den Kraftfahrzeugtyp autonom abfragen.

Die Datenbankeinrichtung 20 ist dazu ausgebildet Regelbasisdaten für die Kraftfahrzeugserviceeinrichtung bereitzustellen.

Gemäß einem Ausführungsbeispiel der vorliegenden Erfindung können Regelbasisdaten unter anderem Bedarfsermittlungsrelationen für eine benötigte Anzahl an Ladesäulen sein oder die bei der jeweiligen Automarke eingesetzten Batteriegrößen und Ladedauern einzelner Fahrzeugmodelle bei normierter Ladeleistung sein.

Gemäß einem Ausführungsbeispiel der vorliegenden Erfindung kann eine normierte Ladeleistung von 11 kW vorgesehen sein bzw. die determinierte Platzbelegungsdauer zum Laden sowie die markenindividuellen Notwendigkeiten zur Durchführung der drei Kernprozesse "Probefahrt", "Fahrzeugauslieferung" und "Fahrzeugservice" werden vorausberechnet.

Gemäß einem Ausführungsbeispiel der vorliegenden Erfindung können auch Prämissen definiert werden pro verkauftem Fahrzeug finden im Schnitt fünf Probefahrten statt, danach muss die Batterie jeweils entsprechend definierter kW Leistung geladen werden).

Die Berechnungseinrichtung 30 ist dazu ausgebildet, basierend auf den Betriebsparameterdaten und den Regelbasisdaten die Ladeinfrastrukturplanungsdaten für die Kraftfahrzeugserviceeinrichtung bzw. für den Standort zu berechnen.

Gemäß einem Ausführungsbeispiel der vorliegenden Erfindung können als Ladeinfrastrukturplanungsdaten die Anzahl an notwendigen Ladesäulen z. B. in Abhängigkeit einer Leistungsklasse der Ladesäulen, Ladezyklen und Ladedauern für verschiedene Ladetechnologien sowie Automarke bzw. Fahrzeugtyp sein.

Gemäß einem Ausführungsbeispiel der vorliegenden Erfindung ist die Berechnungseinrichtung 30 dazu ausgebildet, Limitationen am Standort festzustellen und so die Verwendung von unterschiedlichen Ladetechnologien in der Form eines modular determinierbaren Technologiebaukastens vorzuschlagen.

Gemäß einem Ausführungsbeispiel der vorliegenden Erfindung ist die Berechnungseinrichtung 30 dazu ausgebildet, dass beispielsweise bei einer Überschreitung einer vorgebaren Anzahl an geforderten Ladesäulen gegenüber der Anzahl an freien Parkplätzen, Ladesäulen mit höheren Ladeleistungen als die zuvor normierte Ladeleistung vorgeschlagen werden, um den Fahrzeugdurchsatz aufgrund verkürzter Ladedauer zu erhöhen.

Gemäß einem Ausführungsbeispiel der vorliegenden Erfindung ist im Zuge der Ermittlung der Ladezyklen und Belegungsberechnung der Ladeinfrastruktur vorgesehen und die Berechnungseinrichtung 30 dazu ausgebildet, dass der durchschnittliche kWh Verbrauch pro Tag bzw. Jahr für das Geschäftsfeld Elektromobilität errechnet wird.

Gemäß einem Ausführungsbeispiel der vorliegenden Erfindung ist die Berechnungseinrichtung 30 dazu ausgebildet, dass der Wert für ein Lastspitzenmanagement bzw. Optimierung der Stromtarifstruktur oder zur Kostenstellenzuweisung in der Kraftfahrzeugserviceeinrichtung verwendet werden kann.

Gemäß einem Ausführungsbeispiel der vorliegenden Erfindung kann vorgesehen sein, dass die Berechnungseinrichtung 30 durch Kombination der angebotsorientierten kW Vorgaben/Notwendigkeiten der Marken Optimierungsmöglichkeiten der Ladeinfrastruktur für Mehrmarkenbetriebe berechnet.

Dies geschieht beispielsweise etwa in der Form von Marken-übergreifenden Abfragen und Planungen für einen Standort, Einsatz von Technologien, die zu den Anforderungen aller Marken kongruent sind, Bündelung von Ladeinfrastrukturen in einem Ladepark oder dergleichen.

Dies ermöglicht vorteilhaft, dass die Anforderungen der Kraftfahrzeugserviceeinrichtungs-Verbände (Händlerverbände) erfüllt werden und deutliche Synergieeffekte zwischen den vertretenen Automarken am Standort erzielt werden.

Der Einspareffekt pro Standort ist dabei beispielsweise besonders abhängig von Absatzvolumen, verwendeter technischer Lösung und Automarkenkonstellation und entsteht durch verringerte Beratungskosten, Vermeidung von Fehlinvestitionen, Optimierung der Prozesskosten in der Kraftfahrzeugserviceeinrichtung (Autohaus) sowie Schaffung von gemeinsamer Nutzung von Anlagen und Anerkennungsmöglichkeiten zwischen den Automarken.

Des Weiteren ist die Berechnungseinrichtung 30 dazu ausgebildet, eine Verwendung von elektrischen Energiespeichern und/oder von elektrischen Transformatoren basierend auf den technischen Stromversorgungsanschlussbedingungen für den Standort der Kraftfahrzeugserviceeinrichtung zu projektieren.

Durch die betriebsindividuell verarbeiteten Inputfaktoren durch die Dateneingabeeinrichtung 10 bzw. durch die Datenbankeinrichtung 20, die digitale Verarbeitung und die Generierung und Bereitstellung entsprechend umzusetzender Ausgabegrößen durch die Berechnungseinrichtung 30, ist eine Interaktion der Vorrichtung 100 mit der Außenwelt sichergestellt.

Gemäß einem Ausführungsbeispiel der vorliegenden Erfindung können die Inputfaktoren für das digitale Tool in Form eines Fragebogens im jeweiligen Betrieb abgefragt werden, z.B. prognostiziertes Absatzvolumen und Mix, Wartungsvolumen, Strom-Einspeiseleistung des Standortes sowie aktuelle Spitzenlasten und Erweiterbarkeit sowie Anzahl frei verfügbarer Parkplatzflächen zum Aufladen von Fahrzeugen.

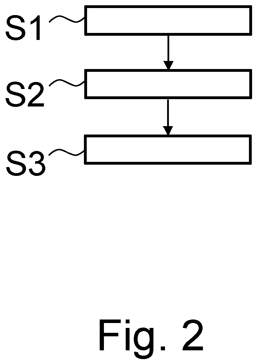

Die Fig. 2 zeigt ein Flussdiagramm zur Illustration von Schritten eines Verfahrens zum Projektieren einer Ladeinfrastruktur einer Kraftfahrzeugserviceeinrichtung gemäß einem Ausführungsbeispiel der Erfindung.

In einem Schritt S1 werden Betriebsparameter der Kraftfahrzeugserviceeinrichtung mittels einer Dateneingabeeinrichtung 10 abgefragt und die abgefragten Betriebsparameter als Betriebsparameterdaten bereitgestellt.

In einem weiteren Schritt S2 werden Regelbasisdaten für die Kraftfahrzeugserviceeinrichtung mittels einer Datenbankeinrichtung 20 bereitgestellt und in einem Schritt S3 zu Ladeinfrastrukturplanungsdaten basierend auf den Betriebsparameterdaten und den Regelbasisdaten mittels einer Berechnungseinrichtung 30 berechnet.

Gemäß einem Ausführungsbeispiel der vorliegenden Erfindung können die technischen Stromversorgungsanschlussbedingungen für einen Standort der Kraftfahrzeugserviceeinrichtung abgefragt werden und als die Betriebsparameterdaten bereitgestellt werden.

Gemäß einem Ausführungsbeispiel der vorliegenden Erfindung kann basierend auf den technischen Stromversorgungsanschluss- und IST-Nutzungsbedingungen (frei verfügbare KW-Leistung) für den Standort der Kraftfahrzeugserviceeinrichtung eine Verwendung von elektrischen Energiespeichern und/oder von elektrischen Transformatoren projektiert werden.

Gemäß einem Ausführungsbeispiel der vorliegenden Erfindung können
i) Absatzprognosedaten;
ii) Wartungsprognosedaten;
iii) Flächendaten;
iv) Parkplatzdaten; oder
v) Fahrzeugbestandsdaten
der Kraftfahrzeugserviceeinrichtung abgefragt und als die Betriebsparameterdaten bereitgestellt werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar.

Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (100) zum Projektieren einer Ladeinfrastruktur einer Kraftfahrzeugserviceeinrichtung, wobei die Vorrichtung umfasst:
- eine Dateneingabeeinrichtung (10), welche dazu ausgebildet ist, Betriebsparameter der Kraftfahrzeugserviceeinrichtung abzufragen und als Betriebsparameterdaten bereitzustellen;
- eine Datenbankeinrichtung (20), welche dazu ausgebildet ist, Regelbasisdaten für die Kraftfahrzeugserviceeinrichtung bzw. für den Standort bereitzustellen;
- eine Berechnungseinrichtung (30), welche dazu ausgebildet ist, basierend auf den Betriebsparameterdaten und den Regelbasisdaten Ladeinfrastrukturplanungsdaten für die Kraftfahrzeugserviceeinrichtung bzw. für den Standort zu berechnen.

2. Vorrichtung nach Anspruch 1,
wobei die Dateneingabeeinrichtung (10) dazu ausgebildet ist, technische Stromversorgungsanschluss- und/oder Nutzungsbedingungen für einen Standort der Kraftfahrzeugserviceeinrichtung abzufragen und als die Betriebsparameterdaten bereitzustellen.

3. Vorrichtung nach Anspruch 2,
wobei die Berechnungseinrichtung (30) dazu ausgebildet ist, basierend auf den technischen Stromversorgungsanschluss-und/oder Nutzungsbedingungen für den Standort der Kraftfahrzeugserviceeinrichtung eine Verwendung von elektrischen Energiespeichern und/oder von elektrischen Transformatoren zu projektieren.

4. Vorrichtung nach einem der Ansprüche 1 bis 3,
wobei die Dateneingabeeinrichtung (10) dazu ausgebildet ist,
vi) Absatzprognosedaten;
vii) Wartungsprognosedaten;
viii) Flächendaten;
ix) Parkplatzdaten; oder
x) Fahrzeugbestandsdaten
der Kraftfahrzeugserviceeinrichtung abzufragen und als die Betriebsparameterdaten bereitzustellen.

5. Vorrichtung nach einem der Ansprüche 1 bis 4,
wobei die Datenbankeinrichtung (20) dazu ausgebildet ist, als die Regelbasisdaten Bedarfsermittlungsrelationen für eine benötigte Anzahl an Ladesäulen bereitzustellen.

6. Vorrichtung nach Anspruch 5,
wobei die Datenbankeinrichtung (20) dazu ausgebildet ist, die Bedarfsermittlungsrelationen für die benötigte Anzahl an Ladesäulen in Abhängigkeit einer Leistungsklasse der Ladesäulen bereitzustellen.

7. Vorrichtung nach einem der Ansprüche 1 bis 6,
wobei die Berechnungseinrichtung (30) dazu ausgebildet ist, basierend auf den Betriebsparameterdaten und den Regelbasisdaten einen elektrischen Energieverbrauch für die Kraftfahrzeugserviceeinrichtung zu berechnen.

8. Vorrichtung nach einem der Ansprüche 1 bis 7,
wobei die Dateneingabeeinrichtung (10) dazu ausgebildet ist, einen Kraftfahrzeugtyp abzufragen und als die Betriebsparameterdaten bereitzustellen; und
wobei die Berechnungseinrichtung (30) dazu ausgebildet ist, basierend auf dem abgefragten Kraftfahrzeugtyp die Ladeinfrastrukturplanungsdaten für die Kraftfahrzeugserviceeinrichtung für den Standort zu berechnen.

9. Vorrichtung nach einem der Ansprüche 1 bis 8,
wobei die Berechnungseinrichtung (30) dazu ausgebildet ist, als die Ladeinfrastrukturplanungsdaten für die Kraftfahrzeugserviceeinrichtung bzw. für den Standort eine benötige Anzahl an Ladesäulen zu berechnen.

10. Vorrichtung nach Anspruch 9,
wobei die Berechnungseinrichtung (30) dazu ausgebildet ist, die benötigte Anzahl an Ladesäulen in Abhängigkeit einer Leistungsklasse der Ladesäulen zu berechnen.

11. Verfahren zum Projektieren einer Ladeinfrastruktur einer Kraftfahrzeugserviceeinrichtung, wobei das Verfahren folgende Verfahrensschritte umfasst:
- Abfragen (S1) von Betriebsparameter der Kraftfahrzeugserviceeinrichtung mittels einer Dateneingabeeinrichtung (10) und Bereitstellen der abgefragten Betriebsparameter als Betriebsparameterdaten;
- Bereitstellen (S2) von Regelbasisdaten für die Kraftfahrzeugserviceeinrichtung mittels einer Datenbankeinrichtung (20); und
- Berechnen (S3) von Ladeinfrastrukturplanungsdaten basierend auf den Betriebsparameterdaten und den Regelbasisdaten mittels einer Berechnungseinrichtung (30).

12. Verfahren nach Anspruch 11,
wobei die technischen Stromversorgungsanschluss- und/oder Nutzungsbedingungen (frei verfügbare KW-Leistung) für einen Standort der Kraftfahrzeugserviceeinrichtung abgefragt und als die Betriebsparameterdaten bereitgestellt werden.

13. Verfahren nach Anspruch 12,
wobei basierend auf den technischen Stromversorgungsanschluss-und/oder Nutzungsbedingungen für den Standort der Kraftfahrzeugserviceeinrichtung eine Verwendung von standortspezifischen Ladetechnologien, elektrischen Energiespeichern und/oder von elektrischen Transformatoren projektiert wird.

14. Verfahren nach einem der Ansprüche 11 bis 13,
wobei
i) Absatzprognosedaten;
ii) Wartungsprognosedaten;
iii) Flächendaten;
iv) Parkplatzdaten; oder
v) Fahrzeugbestandsdaten
der Kraftfahrzeugserviceeinrichtung abgefragt und als die Betriebsparameterdaten bereitgestellt werden.

15. Computerprogrammprodukt, umfassend Befehle, die bei der Ausführung des Programms durch einen Computer diesen veranlassen, die Schritte des Verfahrens nach einem der Ansprüche 11 bis 14 auszuführen.
